# EUROPEAN PATENT SPECIFICATION

(11) **EP 0 772 993 B1**
(45) Date of publication and mention of the grant of the patent: **23.05.2001**
(21) Application number: 96850172.6
(22) Date of filing: 16.10.1996
(51) Int. Cl.: A47L 9/26, H02G 11/02

(54) **Slip ring device for a cable reel**
Schleifringanordnung für Kabeltrommel
Dispositif de bague collectrice pour enrouleur de câble

(30) Priority: 09.11.1995 SE 9503968
(43) Date of publication of application: 14.05.1997
(73) Proprietor: AKTIEBOLAGET ELECTROLUX, 105 45 Stockholm (SE)
(72) Inventor: Kilström, Lars, 183 30 Täby (SE)
(74) Representative: Erixon, Bo

(56) References cited:
- EP-A- 0 099 048
- DE-A- 2 548 131
- US-A- 4 284 180
- US-A- 5 180 040

## Description

This invention relates to a cable reel comprising a slip ring device and a cable drum rotating on a stationary shaft said drum being provided with at least one contact or the like to which the cable of the reel is connected.

Cable reels of the type mentioned above are previously known and are used for instance on vacuum cleaners, see SE-A-386063 or US-A-5180040. The reel is arranged inside the shell of the vacuum cleaner and comprises a drum on which the cable is normally stored. The rotating motion of the drum is usually achieved by means of a spring which is tensioned when the cable is pulled out. When an arresting mechanism is released the spring force is used to rotate the drum and wind up the cable. In order to transfer electric energy in the previously known arrangements from said cable, which is connected to a wall socket, to the vacuum cleaner motor and other electric equipment in the vacuum cleaner the cable drum is provided with contacts to which the conduits of the cable are connected. These contacts rest on electric conductors in the form of slip rings having different diameters arranged on a side wall of the cable reel this side wall being secured to the vacuum cleaner. The disadvantage with this arrangement is that it comprises a large amount of separate parts in the form of electric conductors, contact pins, slip rings and contacts which complicates mounting and means a comparatively large material consumption making the means a comparatively large material consumption, thus making the arrangement comparatively expensive. The position of the slip rings also means that the friction moment which becomes the result of the abutment of the contacts with the slip rings is rather large. Usually it is also difficult to repair such damages on the cable which usually appear at the connection point of the cable reel since the cable reel has to be removed from the vacuum cleaner to make the repair area accessible.

The purpose of this invention is to achieve a material saving, simple and hence cheap slip ring arrangement, to create the smallest possible friction resistance during winding and unwinding and to make it possible to remove the cable from the drum without removing the cable reel from the vacuum cleaner.

These objects are achieved by a cable reel having the features defined in claim 1.

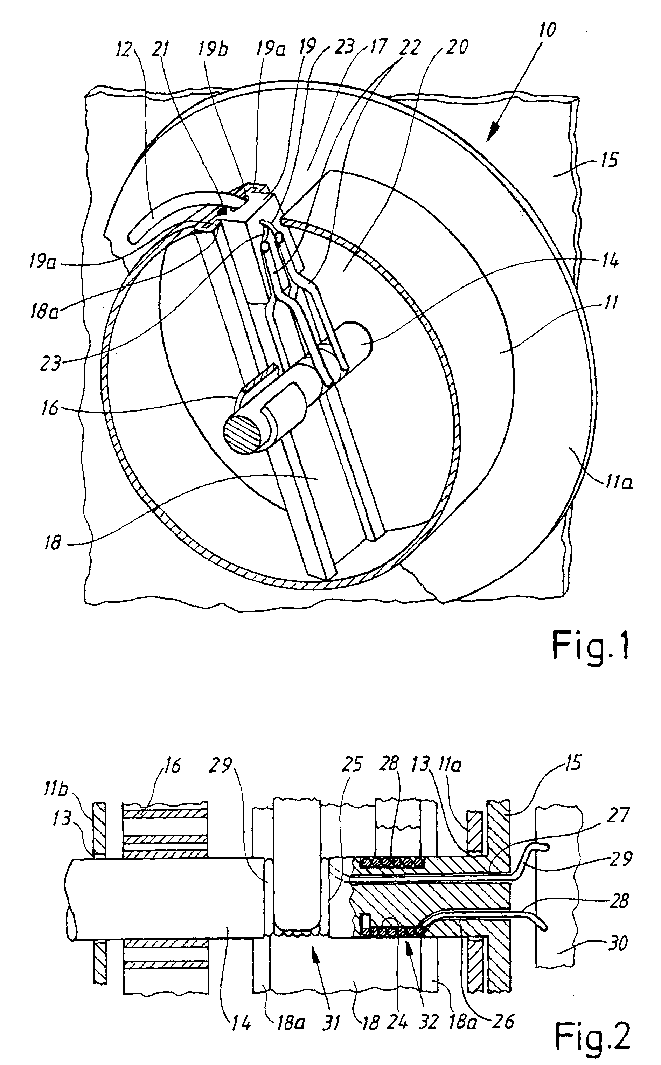

An embodiment of the invention will now be described with reference to the accompanying drawing on which Fig. 1 is a partly broken perspective view of a device according to the invention whereas Fig. 2 is a partly broken vertical projection of the slip ring arrangement shown at the center of Fig. 1.

As appears from Fig. 1 and 2 the cable reel 10 comprises a drum 11 on which a cable 12 can be wound. The cable drum has side walls 11a and 11b resp. which keep the cable on the drum. The side walls each have a central circular opening 13 through which a stationary shaft 14 extends. The shaft 14 is a part of or is connected to a wall part 15 of the cable reel the wall part being fixed to the vacuum cleaner. The cable reel in the usual way also comprises a spring 16, not shown in detail, which acts between the cable drum and the stationary shaft 14 the spring being tensioned when the cable is pulled out from the vacuum cleaner. In order to lock the cable in its extended position there is also a conventional arresting mechanism, not shown.

The drum 11 has an opening 17 and from this opening a bar 18 extends mainly radially inwards towards the opposite wall part of the drum. The bar 18 supports a sliding element 19 which from the outside of the drum can be inserted into the space 20 which is formed in the central part of the drum and by means of a screew 21 or the like be fixed to the bar. The bar 18 has hook shaped edge parts 18a cooperating with extending edge parts 19a on the sliding element so that the sliding element is safely kept on the bar when beeing mounted. The sliding element 19 supports two resilient contacts 22 arranged in a side by side relationship and directed radially inwards. The contacts 22 are yoke shaped and have legs with outer ends which are inclined outwards so that they will enter the shaft at opposite sides when the sliding element is inserted into the space 20. The sliding element 19 also has an opening 19b through which the two conduits 23 of the cable 12 can be connected to the contacts 22 by means of soldering, screws or by other suitable means.

The shaft 14 has two peripheral grooves 24, 25 each via a channel 26, 27 being connected to one end of the shaft. Threads 28, 29 of electrically conductive material are helically wound in a plurality of turns about the shaft 14 in the grooves 24 and 25 resp. the two ends of the threads being secured in the grooves. The threads extend through the mainly axial channels 26, 27 to the outside of the end of the shaft where they are connected to the electric circuit 30 of the vacuum cleaner. Thus, the threads wound in the grooves 24 and 25 form slip rings 31 and 32 resp. for the contacts 22.

The device operates in the following way. When the cable reel is mounted the shaft 14 is inserted through the openings 13 of the side walls 11a, 11b of the drum whereby the cable drum is supported for rotation on the shaft. Then the sliding element 19 with associated contacts 22 and the cable 12 is placed on the bar 18 and is moved radially inwards towards the center of the drum. This means that the diverging ends of the contacts 22 will abut the slip rings 31, 32 and that the contacts when being further depressed by the sliding means will move outwards and be resiliently pressed against the threads whichever position the cable drum takes during rotation. In order to prevent the sliding element from seperating from the cable drum the sliding element is then secured by means of the screw 21. Current which enters via the cable 12 will thus be transmitted to the threads 28 and 29 via the contacts 22 and from there to the electric circuit 30 of the vacuum cleaner.

It should be observed that also if this invention primarily is applicable on cable reels of different types for instance for household apparatus such as vacuum cleaners and food preparing machines it is of course also possible to use the principal of the invention also for other technical areas where slip ring arrangements are used to transmit electric energy between two or several parts which are rotating with respect to each other.

## Claims

1. Cable reel comprising a slip ring device and a cable drum (11) rotating on a stationary shaft (14) said drum being provided with at least one contact (22) or the like to which a cable (12) of the cable reel (10) is connected, **characterized in** that the slip ring (31,32) against which said contact rests comprises a thread- or strip shaped element (28,29) of electrically conductive material which is wound about the shaft in more than one turn, said element extending through the shaft to connection points outside the cable reel.

2. Cable reel according to claim 1, **characterized in** that the shaft (14) has at least one peripheral groove (24,25) for said slip ring.

3. Cable reel according to claim 1 or 2, **characterized in** that one end part of the thread or strip shaped element (28,29) is the wound part and that the element from this part at least partly extends through a channel (26,27) in the shaft to connection points outside the cable reel.

4. Cable reel according to claim 3, **characterized in** that the channel (26,27) is mainly axial with respect to the shaft.

5. Cable reel comprising according to any of the preceding claims, **characterized in** that the shaft (14) has at least two slip rings (31,32) which are arranged axially separated.

6. Cable reel according to any of the preceding claims, **characterized in** that the contacts (22) as well as the end of the cable are fixed on a means (19) which is removably fastened to the cable drum.

7. Cable reel according to claim 5, **characterized in** that said means (19) is movable on a mainly radially arranged track (18) in the cable drum.

8. Cable reel according to any of the preceding claims, **characterized in** that the contact (22) is yoke shaped one leg of the contact abutting one side of the slip ring,

## Patentansprüche

1. Kabeltrommel, welche eine Schleifringanordnung und eine Kabelrolle (11) umfaßt, die sich auf einer feststehenden Welle (14) dreht, wobei die Rolle mit mindestens einem Kontakt (22) oder dergleichen versehen ist, mit welchem ein Kabel (12) der Kabeltrommel (10) verbunden ist, **dadurch gekennzeichnet,** daß der Schleifring (31, 32) an welchem der Kontakt anliegt, ein spiral- oder streifenförmiges Element (28, 29) aus elektrisch leitendem Material umfaßt, welches um die Welle in mehr als einer Windung gewickelt ist, und das Element sich durch die Welle zu den Anschlußpunkten außerhalb der Kabeltrommel erstreckt.

2. Kabeltrommel nach Anspruch 1, **dadurch gekennzeichnet,** daß die Welle (14) mindestens eine periphere Nut (24, 25) für den Schleifring aufweist.

3. Kabeltrommel nach Anspruch 1 oder 2, **dadurch gekennzeichnet,** daß ein Endbereich des spiral- oder streifenförmigen Elementes (28, 29) der gewickelte Bereich ist, und daß sich das Element von diesem Bereich zumindest teilweise durch einen Kanal (26, 27) in der Welle zu den Verbindungspunkten außerhalb der Kabeltrommel erstreckt.

4. Kabeltrommel nach Anspruch 3, **dadurch gekennzeichnet,** daß der Kanal (26, 27) im Verhältnis zur Achse im wesentlichen axial verläuft.

5. Kabeltrommel nach einem oder mehreren der vorhergehenden Ansprüche, **dadurch gekennzeichnet,** daß die Welle (14) mindestens zwei Schleifringe (31, 32) besitzt, welche axial getrennt angeordnet sind.

6. Kabeltrommel nach einem oder mehreren der vorhergehenden Ansprüche, **dadurch gekennzeichnet,** daß die Kontakte (22) sowie das Ende des Kabels an einer Einrichtung (19) befestigt sind, welche an der Kabelrolle lösbar befestigt ist.

7. Kabeltrommel nach Anspruch 5, **dadurch gekennzeichnet,** daß die Einrichtung (19) in der Kabelrolle auf einer im wesentlichen radial angeordneten Schiene (18) bewegbar ist.

8. Kabeltrommel nach einem oder mehreren der vorhergehenden Ansprüche, **dadurch gekennzeichnet,** daß der Kontakt (22) jochförmig ist, wobei ein Bein des Kontaktes jeweils an einer Seite des Schleifringes anliegt.

## Revendications

1. Enrouleur de câble comprenant un dispositif à bague collectrice et un tambour à câble (11) tournant sur un axe stationnaire (14), ledit tambour étant équipé d'au moins un contact (22) ou similaire auquel un câble (12) de l'enrouleur de câble (10) est connecté, caractérisé en ce que la bague collectrice (31, 32) contre laquelle ledit contact repose comprend un élément en forme de fil ou de bande (28, 29) de matériau électriquement conducteur qui est enroulé autour de l'axe sur plus d'un tour, ledit élément s'étendant à travers l'axe à des points de connexion, à l'extérieur de l'enrouleur de câble.

2. Enrouleur de câble selon la revendication 1, caractérisé en ce que l'axe (14) comporte au moins une rainure périphérique (24, 25) pour ladite bague collectrice.

3. Enrouleur de câble selon la revendication 1 ou 2, caractérisé en ce qu'une partie terminale de l'élément en forme de fil ou de bande (28, 29) est la partie enroulée et que depuis cette partie, l'élément s'étend au moins partiellement à travers un canal (26, 27) dans l'axe à des points de connexion à l'extérieur de l'enrouleur de câble.

4. Enrouleur de câble selon la revendication 3, caractérisé en ce que le canal (26, 27) est principalement axial par rapport à l'axe.

5. Enrouleur de câble selon l'une quelconque des revendications précédentes, caractérisé en ce que l'axe (14) comporte au moins deux bagues collectrices (31, 32) qui sont disposées axialement de façon séparée.

6. Enrouleur de câble selon l'une quelconque des revendications précédentes, caractérisé en ce que les contacts (22) ainsi que l'extrémité du câble sont fixés sur un moyen (19) qui est attaché de façon réversible au tambour à câble.

7. Enrouleur de câble selon la revendication 5, caractérisé en ce que ledit moyen (19) est mobile sur une piste (18) disposée principalement de façon radiale dans le tambour à câble.

8. Enrouleur de câble selon l'une quelconque des revendications précédentes, caractérisé en ce que le contact (22) est en forme de collier, une patte du contact étant contiguë à un côté de la bague collectrice.
